# EUROPEAN PATENT SPECIFICATION

(11) **EP 1 790 222 B1**
(45) Date of publication and mention of the grant of the patent: **05.08.2009**
(21) Application number: 05111471.8
(22) Date of filing: 29.11.2005
(51) Int. Cl.: A01N 1/00

(54) **Technique of mummies processing**
Technik zur Behandlung von Mumien
Technique pour le traitement de momies

(43) Date of publication of application: 30.05.2007
(73) Proprietor: BEDIR, Yahya, Doha (QA)
(72) Inventor: BEDIR, Yahya, Doha (QA)
(74) Representative: Iskender, Ibrahim

(56) References cited:
- FRANK FORD: INTERNET ARTICLE, [Online] 8 March 2005 (2005-03-08), XP002369236 Retrieved from the Internet: URL:http://web.archive.org/web/20050308175 311/http://www.frets.com/FRETSPages/Luthie r/Data/Materials/Shellac/shellac.html>
- DATABASE EMBASE [Online] ELSEVIER SCIENCE PUBLISHERS, AMSTERDAM, NL; 2001, HAUSEN B M ET AL: "Shellac contact allergy" XP002369237 Database accession no. EMB-2001413204 & AKTUELLE DERMATOLOGIE 2001 GERMANY, vol. 27, no. 10, 2001, pages 315-318, ISSN: 0340-2541
- DATABASE WPI Section Ch, Week 200566 Derwent Publications Ltd., London, GB; Class A97, AN 2005-642752 XP002369240 & JP 2005 232147 A (PET GREEN KK) 2 September 2005 (2005-09-02)
- DATABASE WPI Section Ch, Week 197933 Derwent Publications Ltd., London, GB; Class A97, AN 1979-60529B XP002369241 & JP 54 084033 A (KURODA T) 4 July 1979 (1979-07-04)

## Description

### TECHNICAL FIELD

The present invention relates to a preservative method for use in mummifying a dead body to prevent decomposition.

The present invention particularly relates to a method comprising the steps of preparing the solution comprising natural shellac resin solved in ethyl alcohol or preferably in mixture of ethyl alcohol with water immersing any dead body into this solution for period of time between 3 to 14 days.

### BACKGROUND OF THE INVENTION

Mummification is a custom of preserving bodies of the dead with a belief in afterlife, especially developed in ancient Egypt and comprises the steps of mummifying, drying a dead body and wrapping it as a mummy. Mentioned process is quite complicated and costly. Especially, mummifying means preservation of a dead body by treating with spices and palm wine.

As it is well known, ancient mummies have been found in many countries in world, like Egypt, China, Papua, Chile, Peru and some of them are about 4000 years old. Mummification was stopped in Egypt in 392 AC, and processing way disappeared completely. There is no one succeeded to achieve unwrapped mummy in the world from that time till now. Because the real active materials of solution has not been known.

It is possible to reserve dead body without using the active materials if it is well wrapped by isolated layers of lenin with resin and by using palm wine, dead body will be as closed chamber stored in alcohol for a long time. Real mummy should remain stable in open air if its cover is removed away.

Researchers believe that actual materials required for mummification are fragrant spices, frankincense, cedar, myirh, palm wine, resin, and natron salt to desiccate body. At the end of this study, it was found that wine of palm was one of the active materials since it contains alcohol, also resin is the second active material needed for processing, and natron was important only to reduce required time to desiccate mummy, while other used spices were used just to give acceptable smelling on mummy.

New type of mummy has been invented by removing the red brown solids from solution. It had actual color of dead body. It was long term leakage of fat from mummy above surface of body. Pyramid was built as an apparatus to solve this problem and to reserve leaked fat not to deteriorate. Ancient Egyptians have stopped building more pyramids in 1800 BC when they used simple way of fat protection method, by applying paste cover of clay mixed with mummification solution and wrapping dead body. This clay cover remains wet from internal side for a long time and reserve leaked fat safely.

So far from making mummies now thousands of people used to do embalming for fox or different kinds of birds while no body can do mummy. Embalming means to take skin of dead with skull and to dry them after that to reshape them again by using cooton as filler and sewing just to be similar to the original dead while mummy only can be done by mummifying dead body to make mummy you must keep all body accept internal organs.

There have been several attempts to provide preservative embalming compositions and methods. U.S. patent 2,333,182 to lra Jones Hilton, discloses an embalming composition comprising an aqueous methanol mixture containing glyoxal, formaldehyde and small amounts of glycerine, sodium nitrate and borax.

WO 02068017 discloses a method and a preservative composition for use in embalming a dead body to temporarily maintain a desirable state of non-decomposition. Disclosed method comprises the steps of draining blood from the circulatory system of a dead body; and injecting a preservative composition into a drained circulatory system of the dead body. The preservative composition consisting
(a) a material selected from the group consisting of ascorbic acid, the sodium and the potassium salts thereof and mixtures thereof; (b) a material selected from the group consisting of citric acid, the sodium and potassium salts thereof and mixtures thereof;
(c) a material selected from the group consisting of sodium carbonate, potassium carbonate and mixtures thereof; and (d) material selected from the group consisting of sodium and potassium sulfite, bisulfite, and metabisulfite and mixtures thereof.

US 5,607,668 discloses an improved embalming composition and method. According to the US 5,607,668 the embalming fluid is a mixture including glutaraldehyde, an aromatic ether of ethanol, e.g. phenoxy-ethanol, at least one alcohol, and a polyhydric alcohol humectant. The formulation has no formaldehyde.

These prior art attempts disclose different embalming compositions and methods. But each of these inventions has some disadvantages such as environmental hazards of the chemical components, high costs of chemical components and ineffectiveness at providing non-decomposition of dead bodies.

### SUMMARY OF THE INVENTION

Regarding the present background of the relevant scientific technique, the principal object of the present invention is to provide an improved method for use in mummifying a dead body for preventing decomposition for a long time period.

A more specific object of the present invention is to provide a method for use in mummifying which is non-hazardous to the users who applies the method to dead bodies.

A different object of the present invention is to provide a preservative method which can be used to open any wrapped ancient mummy safely by putting it in a solution for a period of time.

Another object of the present invention is to provide a method for use in mummifying to repair any ancient mummy by using the same solution.

An object of the present invention is to provide a method for use in mummifying to repair the shown black spots on ancient mummies happen due to high concentration of shellac or quick dryness of ethyl alcohol.

In order to meet said objectives and solve the problems experienced in the relevant art, the present invention provides a method for mummifying a dead body to prevent decomposition comprising the steps of preparing the solution comprising natural shellac resin solved in pure ethyl alcohol or in diluted ethyl alcohol with water, immersing any dead body into this solution for period of time between 3 to 14 days.

### DETAILED DESCRIPTION OF INVENTION

The present invention relates to a preservative method for use in mummifying a dead body to prevent decomposition for a long time period.

The preservative method mentioned above comprises the steps of preparing the solution comprising natural shellac resin solved in ethyl alcohol as active materials. Pure ethyl alcohol or ethyl alcohol diluted with water in various proportions can be used within the context of the present invention.

The shellac polymer is obtained from Lac spider in a tree variety grown in China, India, and Thailand. Lac spiders are agglomerated and subjected to a thermal process to obtain the shellac raw material. Approximately 300.000 spiders are required to obtain one kilogram Lac.

Shellac is a natural, complex polymeric material composed of polyester mixtures. Recent researches suggest that the shellac content varies from monomer to tetramer acids and that the main identifiable polyester is trihydro fatty acid and dihydroxyterponoid, known as aleuritic acid and jalarik acid, occupying one third of the whole content.

Shellac is a mixture mainly composed of high molecular weight esters and acidic components. It can be shaped by compression under 121-134°C temperature and 6.9-24 MPa pressure or it can be shaped by cooling-down to 32-40°C without relieving the pressure. It is enough plastic due to its thermocytic structure, whereas its mechanical and electrical resistance can be enhanced with thermal processes.

The chemical content of a so-formed resin is shown below in Table 1, as an example.

**Table 1**

| Content | Perc. (%) |
|---|---|
| Ester | 70-82 |
| Free acid | 10-24 |
| Free alcohol (max.) | 1 |
| Hydrocarbons | 1-6 |

The aforementioned values are given only exemplary and by general findings for the composition under the present invention. A representational formula can be specified as C(60)H(90)O(15).

Shellac resin can be solved in basic, aliphatic and aromatic solutions with alcohol, glycol ether, and acetic acid. The resin in alcoholic solutions releases the iron and directs the free iron. Mentioned resin can be carried within human body with resorbable materials like polylactic acid and polyglycolic acid and the like.

The chemical and physical characteristic related to the resin is given in Table 2.

**Table 2**

| Characteristics | Value |
|---|---|
| Melting temperature (°C) | 70-82 |
| Density (g/ml) | 0. 971 - 0. 980 |
| Iodine value | 6.0 - 8.8 |
| Acid value | 12.1 - 24.3 |
| Saponification value | 63.8 - 83.0 |

Natural shellac resin is brought into a solution with ethyl alcohol in various proportions under the present invention. The natural shellac resin is brought into a solution with ethyl alcohol in a proportion of 1:1,5 by weight, and once the reaction is completed. If any dead body immersed in this solution for period of time between 3 to 14 days it will be converted to ancient mummy and for making transparent type mummies solution consists of 1.5 by weight of ethyl alcohol mixed with 1.0 by weight of water and then mixture to be added to 1.0 by weight of natural shellac resin. All solid paraffin (wax) particles are separated by adding water into the ethyl alcohol.

Then sediments of ester can be observed in bottom and pure solution will float above of solids. This pure solution is the active compound for making transparent mummy and if any dead body immersed in it for period of time between 3 to 14 days it will be converted to transparent mummy.

The dead body will be hard within couple of weeks and fat tends to leak above surface of dead body for a long time. If fat layer above dead body is not well reserved it might affect upper layer of dead body itself.

Any wrapped ancient mummy can be opened safely by putting it in a solution for a period of time and any ancient mummy can be repaired by using the same solution. The shown black spots on ancient mummies happen due to high concentration of shellac or quick dryness of ethyl alcohol and these spots can be repaired.

## Claims

1. A method for mummifying a dead body to prevent decomposition comprising the steps of:
- preparing the solution comprising natural shellac resin solved in pure ethyl alcohol or in diluted ethyl alcohol with water,
- immersing any dead body into this solution for period of time between 3 to 14 days.

2. A method according to claim 1, wherein paraffin particles formed in said solution are removed by the use of water.

## Patentansprüche

1. Ein Mummifizierungsverfahren von einer Leiche für die Verhinderung einer Verfaulung, **dadurch gekennzeichnet dass** es die vorliegende Stufen aufweist,
- Vorbereitung von einer Lösung die natürliches Schellack Harz beinhaltet, das in reinem ethilalkohol oder im wasser gelöstem ethilalkohol gelöst worden ist,
- eintauchen einer Leiche in dieser Lösung für 3 bis 14 Tage.

2. Ein Verfahren nach Anspruch 1, **dadurch gekennzeichnet**, das in der erwähnten Lösung die Paraffinteilchen mit der Benutzung von Wasser enfernt werden.

## Revendications

1. Une méthode pour momifier un cadavre pour empêcher la décomposition comprenant les étapes de:
- préparer cette solution comprenant la gomme de résine naturelle résolu dans l'alcool éthylique pur ou dans alcool éthylique dilué à l'eau,
- plonger tout cadavre dans cette solution pour une période de temps entre 3 à 14 jours.

2. Une méthode selon la revendication 1, dans lequel des particules de paraffine formée dans ladite solution sont éliminés par l'utilisation de l'eau.
